(19) Europäisches Patentamt / European Patent Office / Office européen des brevets

(11) **EP 4 764 388 A1**

(12) **EUROPEAN PATENT APPLICATION**
published in accordance with Art. 153(4) EPC

(43) Date of publication:
**24.06.2026 Bulletin 2026/26**

(21) Application number: **23955968.5**

(22) Date of filing: **22.12.2023**

(51) International Patent Classification (IPC):
**F41G 1/14** (2006.01)

(52) Cooperative Patent Classification (CPC):
Y02T 90/00

(86) International application number:
**PCT/CN2023/141296**

(87) International publication number:
**WO 2025/081650 (24.04.2025 Gazette 2025/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2023 CN 202311363263**

(71) Applicant: **Raytron Technology Co., Ltd.**
**Yantai, Shandong 264006 (CN)**

(72) Inventor: **YANG, Ting**
**Hefei, Anhui 230001 (CN)**

(74) Representative: **Reiser & Partner**
**Patentanwälte mbB**
**Weinheimer Straße 102**
**69469 Weinheim (DE)**

(54) **BALLISTIC CALCULATION METHOD BASED ON FRONT SIGHTING TELESCOPE, COMBINED SIGHTING SYSTEM, AND MEDIUM**

(57) A ballistic calculation method based on a front scope, a combined sighting system and a medium are provided . The ballistic calculation method includes: in a front mode in which a front scope is turned on, displaying an aiming reference point in a front imaging picture of a front display area; adjusting a movement amount of the front imaging picture in response to a movement adjustment operation for the front imaging picture to align the aiming reference point with a reticle center of a main scope, wherein an imaging light type of the front scope is different from an imaging light type of the main scope; acquiring a target distance value of an aiming target; and determining a current ballistic offset value for the aiming target on the basis of the target distance value and ballistic table data, and displaying a ballistic calculation reticle in the front imaging picture on the basis of the current ballistic offset value, so as to allow a sighting operation to be performed on the aiming target according to the position of the ballistic calculation reticle with respect to the reticle center, wherein the ballistic table data includes a correspondence between multiple sets of distance values and ballistic offset values.

| | |
|---|---|
| in a front mode in which a front scope is turned on, displaying an aiming reference point in a front imaging picture of a front display area | S101 |
| adjusting a movement amount of the front imaging picture in response to a movement adjustment operation for the front imaging picture to align the aiming reference point with a reticle center of a main scope, wherein an imaging light type of the front scope is different from an imaging light type of the main scope | S103 |
| acquiring a target distance value of an aiming target | S105 |
| determining a current ballistic offset value for the aiming target on the basis of the target distance value and ballistic table data, and displaying a ballistic calculation reticle in the front imaging picture on the basis of the current ballistic offset value, so as to allow a sighting operation to be performed on the aiming target based on a position of the ballistic calculation reticle with respect to the reticle center, wherein the ballistic table data comprise a correspondence between multiple sets of distance values and ballistic offset values | S107 |

FIG . 2

## Description

### FIELD

The application relates to the technical field of optical sighting, in particular to a ballistic calculation method based on a front scope, a combined sighting system and a computer-readable storage medium.

### BACKGROUND

At present, scopes are widely applied to shooting equipment such as shotguns, and mainstream scopes on the market are white-light scopes. With the development of the infrared technology, infrared scopes are applied more and more widely in various fields such as hunting, law enforcement, patrolling and rescuing. The infrared scopes can effectively solve the problem that white-light scopes cannot be used for photographing and video recording and cannot be used at night, thereby becoming more and more popular. A front scope may be used as a supplement to the white-light scope. For example, Chinese Patent Publication No. CN107229101B, entitled "Uncooled Infrared Front Scope", discloses an infrared front scope used together with a white-light scope. The infrared front scope may be used together with the white-light scope to enable the infrared function of the white-light scope and has gradually become a preference for many users. Although adding the infrared front scope provides the white-light scope with night vision capability, the infrared front scope relies on the reticle of the white-light scope, which cannot satisfy user requirements in scenarios requiring high-precision shooting.

In addition, ballistic calculation is indispensable for professional shooters or users having requirements for shooting precision. Traditional ballistic calculation is integrated in white-light scopes. For example, US Patent No. US9915503B2, entitled "Ballistics systems and methods", discloses a ballistic calculation method, which obtains distance information by means of an external rangefinder and adjusts the position of a mechanical reticle by operating a rotary knob on a white-light scope to fulfil the purpose of ballistic calculation. However, during ballistic calculation, real-time adjustment of the reticle according to the change of the distance information is required, causing inconvenience in use; in addition, in an application scenario where an infrared front scope is added, due to the difference in principle between infrared imaging and white-light imaging, the image size and scale will be different. The ballistic calculation function relying on the adjustment of the reticle of the white-light scope may introduce deviations, which is unacceptable for users.

### SUMMARY

### Technical Problems

To solve the technical problems in the prior art, the application provides a ballistic calculation method based on a front scope, a combined sighting system, and a computer-readable storage medium, which can be used in different light application environments and enable faster and more accurate aiming under the different light application environments.

### Technical Solution

In a first aspect of embodiments of the present invention, a ballistic calculation method based on a front scope is provided, which includes:

in a front mode in which a front scope is turned on, displaying an aiming reference point in a front imaging picture of a front display area;

adjusting a movement amount of the front imaging picture in response to a movement adjustment operation for the front imaging picture to align the aiming reference point with a reticle center of a main scope, wherein an imaging light type of the front scope is different from an imaging light type of the main scope;

acquiring a target distance value of an aiming target; and

determining a current ballistic offset value for the aiming target on the basis of the target distance value and ballistic table data, and displaying a ballistic calculation reticle in the front imaging picture on the basis of the current ballistic offset value, so as to allow a sighting operation to be performed on the aiming target based on a position of the ballistic calculation reticle with respect to the reticle center, wherein the ballistic table data comprises a correspondence between multiple sets of distance values and ballistic offset values.

In a second aspect, a combined sighting system is further provided, which includes a main scope and a front scope detachably mounted in front of the main scope. The front scope includes a main control module configured to implement the ballistic calculation method based on a front scope according to any one of the embodiments.

In a third aspect, a computer-readable storage medium is provided, which stores a computer program thereon. The computer program, when executed by a processor, implements the ballistic calculation method based on a front scope according to any one of the embodiments.

**Beneficial Effects**

According to the ballistic calculation method based on a front scope, in the front mode in which the front scope is turned on, the aiming reference point is displayed in the front imaging picture of the front display area, such that users may adjust the movement of the front imaging picture according to a deviation between the aiming reference point and the reticle center of the main scope to align the aiming reference point with the reticle center of the main scope. When the ballistic calculation function is enabled, by acquiring the target distance value of the aiming target, the current ballistic offset value corresponding to the target is determined according to the target distance value and the ballistic table data, and the ballistic calculation reticle is displayed in the front imaging picture according to the current ballistic offset value, so as to allow the sighting operation to be performed on the target according to the position of the ballistic calculation reticle. The imaging light type of the front scope is different from the imaging light type of the main scope. In this way, by introducing the aiming reference point and allowing for a certain range of movement adjustment of the front imaging picture in the front display area, the aiming reference point can be adjusted to align with the reticle center of the main scope, thereby unifying the coordinate system of the current ballistic calculation reticle of the front scope and the coordinate system of the main scope are unified. This can thus avoid a deviation caused by the ballistic calculation function relying on adjustment of the reticle of the white-light scope, and can also avoid complex operations caused by manual adjustment of the reticle during ballistic calculation, which can not only extend the functionality of the main scope to use in different light application environments, but also achieve the ballistic calculation function integrated within the front scope on the basis of the position of the ballistic calculation reticle being calibrated with respect to the reticle of the main scope, thus allowing users to more quickly and accurately aim at and capture the target according to the ballistic calculation reticle in the front imaging picture.

In the above embodiments, the combined sighting system and the computer-readable storage medium are based on the same concept as the embodiments of the ballistic calculation method based on a front scope and therefore have the same technical effects as the embodiments of the ballistic calculation method based on a front scope, which will not be repeated here.

**BRIEF DESCRIPTION OF THE DRAWINGS**

FIG. 1 is a schematic diagram of an application scenario for a ballistic calculation method based on a front scope according to one embodiment.

FIG. 2 is a flowchart of the ballistic calculation method based on a front scope according to one embodiment.

FIG. 3 is a flowchart of the ballistic calculation method based on a front scope according to another embodiment.

FIG. 4 is a schematic structural diagram of a combined sighting system according to one embodiment.

FIG. 5 is a schematic diagram showing the principle of ballistic calculation of a front scope according to one embodiment.

FIG. 6 is a schematic diagram showing the principle of position calibration of a ballistic calculation reticle of a front scope and a reticle of a main scope according to one embodiment.

**DESCRIPTION OF THE EMBODIMENTS**

The technical solutions of the invention are expounded in further detail below in conjunction with accompanying drawings and specific embodiments.

To better clarify the purposes, technical solutions and advantages of the application, the application is described in further detail below in conjunction with accompanying drawings. The embodiments described below should not be construed as limitations of the application. All other embodiments obtained by those ordinarily skilled in the art without creative labor should also fall within the protection scope of the application.

The expression "some embodiments" involved in the following description indicates subsets of all possible embodiments. It should be noted that "some embodiments" may be identical or different subsets of all possible embodiments and may be combined with each other where no conflicts occur.

The terms "first", "second" and "third" involved in the following description are merely for distinguishing similar objects and do not indicate specific sequences of objects referred to. It is understandable that specific sequences or precedence orders defined by "first", "second" and "third" may be exchanged if appropriate, to allow the embodiments of the application described here to be implemented in other sequences different from those illustrated or described herein.

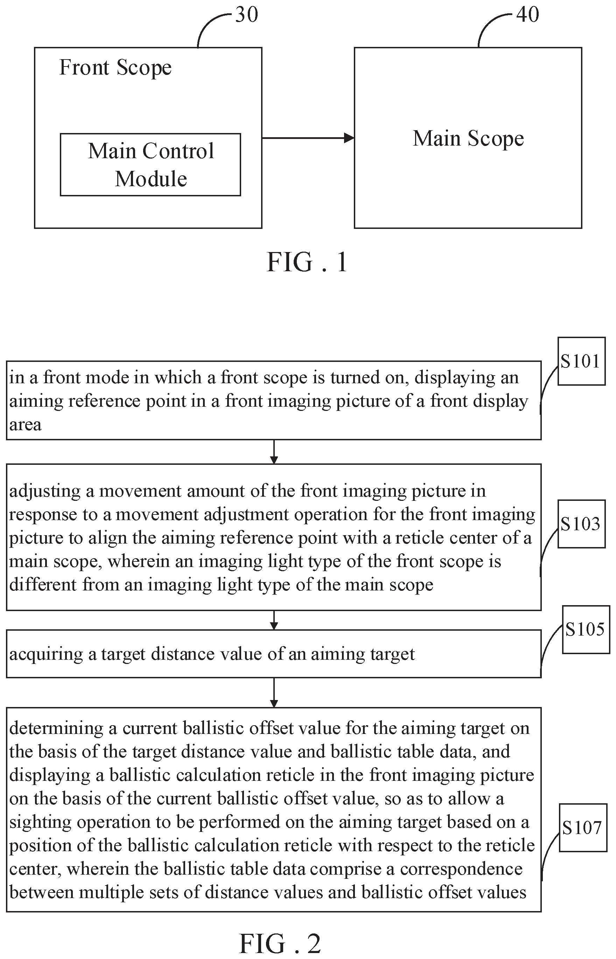

Referring to FIG. 1, which is a schematic diagram of an optional application scenario for a ballistic calculation method based on a front scope according to one embodiment of the application, a combined sighting system includes a main scope 40 and a front scope 30 detachably assembled on the main scope 40. The main scope 40, in a state where the front scope 30 is not assembled, can independently achieve a sighting function in one light application environment, such as a white-light environment with sufficient light. For the convenience of description, an operating mode of the main scope 40 in this state is referred to as a standalone mode. By adding the front scope 30, the main scope 40 can extend its functionality to achieve the sighting function in another light application environment such as a night vision environment with poor light like nighttime or dense fog. For the convenience of description, an operating mode of the main scope 40 with the front scope 30 assembled thereon is referred to as a front mode.

As an optional example, the main scope 40 may be a white-light scope, and the front scope 30 may be an infrared front scope, a front low-light scope, or the like. A main control module is arranged in the front scope 30, which is loaded with a computer program for implementing the ballistic calculation method based on a front scope provided by the embodiments of the application. After the front scope 30 is turned on, the front mode of the combined sighting system is enabled. By introducing an aiming reference point and allowing for a certain range of movement adjustment of a front imaging picture in a front display area, a user is allowed to move and adjust the position of the front imaging picture according to a positional deviation between the aiming reference point and a reticle center of the main scope 40. Through the adjustment to align the aiming reference point with the reticle center of the main scope 40, a coordinate system of a ballistic calculation reticle of the front scope 30 is unified with a coordinate system of a mechanical reticle of the main scope 40, such that a ballistic calculation function can be achieved on the basis of calibrated and unified position of the ballistic calculation reticle and the mechanical reticle of the main scope 40, and the user can thus aim at and capture a target more quickly and accurately according to the ballistic calculation reticle in the front imaging picture. Shooters concern more about how to more quickly and accurately capture and aim at a target with different types of guns in any environments and different application scenarios. The front scope 30 with the ballistic calculation function provides the user with a ballistic calculation reticle display result on the basis of the ballistic calculation reticle position calibrated to align with the reticle position of the main scope 40, thereby better satisfying the needs of user with high requirements in flexibility in use, display of calculation result and calculation accuracy.

It should be noted that the main control module may be implemented by a single chip or a plurality of chips. For example, in a case where the front scope 30 is an infrared front scope, an image processor for enhancing an infrared image needs to be arranged in the infrared front scope, and the computer program for implementing the ballistic calculation method based on a front scope provided by the embodiments of the application may be loaded in and executed by the image processor. Alternatively, an independent chip may be added in the infrared front scope. For example, the main control module includes an image processor and a data processor independent of the image processor, the image processor is configured to enhance an infrared image, and the data processor is configured to load and execute the computer program for implementing the ballistic calculation method based on a front scope provided by the embodiments of the application.

Referring to FIG. 2 which is a flowchart of the ballistic calculation method based on a front scope according to one embodiment of the application, the ballistic calculation method based on a front scope may be applied to the combined sighting system shown in FIG. 1. The ballistic calculation method based on a front scope includes the following steps:

S101, in a front mode in which the front scope is turned on, displaying an aiming reference point in a front imaging picture of a front display area;

The front mode refers to an operating mode in which the front scope is assembled on a main scope and is turned on. A control panel is generally arranged on a housing of the front scope, a control key for user operation to turn on or off the front scope is arranged in the control panel, and the user may operate the control key to enable or disable the front mode. The front display area refers to a display area of the front imaging picture, obtained by the front scope in the front mode, in a display screen. In the combined sighting system, a type of an imaging light of the main scope is different from that of an imaging light of the front scope. Scopes with different imaging light types are based on different imaging principles, so the size and scale of images may be also different, and the size of display areas of the images in their corresponding display screens may also be different.

The aiming reference point is an image point, which is preset and displayed at a fixed position in the front imaging picture. The fixed position is preset to align with a specified position in the display area of the main scope in the standalone mode, and a correspondence between the front display area and the display area of the main scope in the standalone mode may thus be established. In one example, the aiming reference point is a central point of the front imaging picture and aligns with a reticle center in the display area of the main scope in the standalone mode.

S103, adjusting a movement amount of the front imaging picture in response to a movement adjustment operation for the front imaging picture to align the aiming reference point with the reticle center of the main scope, wherein the imaging light type of the front scope is different from the imaging light type of the main scope.

An operation module is generally arranged on the housing of the front scope, and operation keys for controlling the front imaging picture to move, such as a horizontal movement key for controlling the front imaging picture to move in a left-right direction and a vertical movement key for controlling the front imaging picture to move in an up-down direction, are arranged in the operation module. The movement adjustment operation for the front imaging picture may be a press operation performed on the horizontal movement key by the user or a press operation performed on the vertical movement key by the user. The movement amount includes a movement direction and a movement distance. Adjusting the movement amount of the front imaging picture in response to the movement adjustment operation for the front imaging picture may refer to adjusting a desired target left-right movement distance of the front imaging picture by operating the horizontal movement key or adjusting a desired target vertical movement distance of the front imaging picture by operating the vertical movement key.

S105, acquiring a target distance value of an aiming target.

The target distance value of the aiming target may be a distance value measured in real time according to a dynamic change of the trajectory of the aiming target or may be a distance value input by a user in use according to a region where the aiming target is located.

S107, determining a current ballistic offset value for the aiming target on the basis of the target distance value and ballistic table data, and displaying a ballistic calculation reticle in the front imaging picture on the basis of the current ballistic offset value, so as to allow the user to perform a sighting operation on the aiming target based on the position of the ballistic calculation reticle with respect to the reticle center, wherein the ballistic table data include a correspondence between multiple sets of distance values and ballistic offset values.

The ballistic table data including the correspondence between multiple sets of distance values and ballistic offset values indicate the ballistic offsets corresponding to different distance values. It is understandable that, according to the correspondence between the distance values and the ballistic offset values in the ballistic table data, a proportional change relationship between the distance values and the ballistic offset values may be determined, and the ballistic offset corresponding to any distance within an applicable distance range of the ballistic table data may be determined through fitting. In this embodiment, the position of the ballistic calculation reticle, corresponding to the target distance value, in the front imaging picture is determined and displayed by a conversion calculation based on the correspondence between the distance values and the ballistic offset values in the ballistic table data with respect to the target distance value.

By introducing the ballistic table data, ballistic calculation may be simplified, and combined with the capability of quick input of the target distance value for the aiming target, the ballistic calculation efficiency may be improved. By displaying the aiming reference point in the front imaging picture, and adjusting the aiming reference point to align with the reticle center of the main scope, the coordinate system of the ballistic calculation reticle is unified with the coordinate system of the reticle of the main scope. Therefore, by ballistic calculation based on the target distance value and the ballistic table data, and displaying the ballistic calculation reticle in the front imaging picture, the user is allowed to aim at the aiming target according to an offset between the ballistic calculation reticle and the reticle center of the main scope (i.e., the aiming reference point).

In the above embodiment, in the front mode in which the front scope is turned on, the aiming reference point is displayed in the front imaging picture of the front display area, such that the user may adjust the movement of the front imaging picture according to a deviation between the aiming reference point and the reticle center of the main scope to align the aiming reference point with the reticle center of the main scope. When the ballistic calculation function is enabled, by acquiring the target distance value of the aiming target, the current ballistic offset value for the aiming target is determined according to the target distance value and the ballistic table data, and the ballistic calculation reticle is displayed in the front imaging picture according to the current ballistic offset value, so as to allow the sighting operation to be performed on the aiming target according to the position of the ballistic calculation reticle, and the imaging light type of the front scope is different from the imaging light type of the main scope. In this way, by introducing the aiming reference point and allowing for a certain range of the movement adjustment of the front imaging picture in the front display area, the aiming reference point can be adjusted to align with the reticle center of the main scope, thereby unifying the coordinate system of the current ballistic calculation reticle of the front scope and the coordinate system of the main scope. This can avoid a deviation occurring in the ballistic calculation function relying on adjustment of the reticle of the white-light scope, and can also avoid complex operations in manual adjustment of the reticle during ballistic calculation, which can not only extend the functionality of the main scope to use in different light application environments, but also achieve the integrated ballistic calculation function on the basis of the position of the ballistic calculation reticle being calibrated with respect to the reticle of the main scope, thus allowing the user to more quickly and accurately aim at and capture the aiming target according to the ballistic calculation reticle in the front imaging picture.

In some embodiments, in S107, acquiring a target distance value of an aiming target includes:

acquiring the target distance value of the aiming target according to a data input operation, wherein the data input operation includes an input operation performed by means of an operation module, and/or an input operation performed through an application interface; or,

acquiring the target distance value of the aiming target that is obtained by calculation after a ranging module sends a laser signal to the aiming target.

The operation module may be arranged on the housing of the front scope to allow the user to manually input or adjust the current target distance value. For example, the operation module may include a "+" key and a "-" key, and the user may press the "+" key or the "-" key to adjust the target distance value. The operation module may also include a numeric keyboard, and the user may input the target distance value by operating the numeric keyboard. Optionally, the front scope may display an input field for the target distance value in an application interface on the display screen, so that the user can input the target distance value in the input field in the application interface.

Optionally, the front scope may perform real-time ranging by means of a ranging module to obtain the target distance value of the aiming target. A ranging control key for controlling the ranging module to perform ranging may be arranged on the front scope, and the user may control the ranging module to enable the ranging function by operating the ranging control key to automatically obtain the target distance value of the target in real time.

In the above embodiment, the front scope may provide multiple methods for acquiring the target distance value to satisfy user requirements in different application scenarios. For example, when a current user wants to aim at an aiming target at an expected distance of 150 meters, the user may manually input 150 meters as the target distance value. For another example, when the current user wants to aim at a moving target at an uncertain distance ahead, the user may start the ranging module to perform ranging to obtain in real time the target distance value of the moving target.

In some embodiments, before step S107 of determining a current ballistic offset value for the aiming target on the basis of the target distance value and ballistic table data, and displaying a ballistic calculation reticle in the front imaging picture on the basis of the current ballistic offset value, the ballistic calculation method includes:

in a ballistic data calibration mode, determining, on the basis of a selected calibration distance value and currently stored initial ballistic table data, an initial ballistic offset value corresponding to the calibration distance value, and correspondingly displaying, on the basis of the initial ballistic offset value, the ballistic calculation reticle in the front imaging picture; and

in response to an adjustment operation input in a case where a deviation occurs for a shot fired under the guidance of the position of the ballistic calculation reticle, updating the position of the ballistic calculation reticle in the front imaging picture, and synchronously updating the ballistic table data.

The ballistic table data may be data of a ballistic table prestored in the front scope. Through performance testing of the front scope, ballistic offset values corresponding to various integer distances, such as 100m-0.2MOA, 200m-1.5MOA, 300m-6MOA, 400m-17MOA and 500m-31MOA, may be predetermined to form the ballistic table. Optionally, the front scope may also provide a ballistic data calibration mode, so that some more professional shooters may choose to enable the ballistic data calibration mode to input the ballistic table data or adjust the prestored ballistic table data by themselves. After the ballistic data calibration mode is enabled, a user may first select one calibration distance value to be calibrated currently, for example, the user may select 100 meters as the calibration distance value to be calibrated currently. At this moment, the front scope determines an initial ballistic offset value corresponding to 100 meters on the basis of the currently stored initial ballistic table data, and displays the ballistic calculation reticle in the front imaging picture according to the initial ballistic offset value. The user then fires a shot under the guidance of the current ballistic calculation reticle, and it is determined whether a deviation occurs for the shot fired currently; if a deviation occurs, the ballistic offset value in the currently stored ballistic table data is incrementally increased or decreased according to the deviation, and the position of the ballistic calculation reticle in the front imaging picture is updated in real time according to the adjustment of the ballistic offset value. For example, the user may adjust the ballistic offset value corresponding to 100 meters to increase by a preset value, according to a distance the bullet hole from the shot is below a bullseye.

In the above embodiment, by providing the ballistic data calibration mode, the user is allowed to calibrate and adjust the ballistic table data according to personal requirements, and may even set corresponding ballistic table data according to the influence of different climate conditions on shooting in different scenarios, to improve the ballistic calculation accuracy.

In some embodiments, the ballistic calculation method based on a front scope further includes:
in response to a confirmation operation input in a case where no deviation occurs for a shot fired under the guidance of the position of the ballistic calculation reticle, taking a ballistic offset value, corresponding to the selected calibration distance value, in the current ballistic table as a calibrated ballistic offset value.

In the ballistic data calibration mode, after the calibration distance value to be calibrated currently is selected by the user, the front scope determines the ballistic offset value corresponding to the selected calibration distance value on the basis of the currently stored ballistic table data, and displays the ballistic calculation reticle in the front imaging picture on the basis of the ballistic offset value. The user fires a shot under the guidance of the position of the current ballistic calculation reticle in the front imaging picture, and it is determined whether a deviation occurs for the shot fired currently; if no deviation occurs, the ballistic offset value in the currently stored ballistic table data is confirmed, and the ballistic offset value, corresponding to the selected calibration distance value, in the currently stored ballistic table data is taken as the calibrated ballistic offset value. It should be noted that the confirmation of the current ballistic offset value as the calibrated ballistic offset value on the basis of the confirmation operation input in a case where no deviation occurs for a shot may be a confirmation of the calibrated ballistic offset value in the initial ballistic table data or a confirmation after an adjustment made to the ballistic offset value corresponding to the selected calibrated distance value during the adjustment process, which is not limited here.

In the above embodiments, the front scope allows the user to recalibrate the ballistic table data, and by selecting, one by one, target distance values requiring calibration, a shooting test is performed under the guidance of the position of the ballistic calculation reticle to confirm whether the current ballistic offset value is accurate. This operation is easy and intuitive.

In some embodiments, the ballistic calculation method based on a front scope further includes:

in response to an adjustment operation input in a case where a deviation occurs for a shot fired under the guidance of the updated position of the ballistic calculation reticle, updating the position of the ballistic calculation reticle in the front imaging picture, and synchronously updating the ballistic table data; and

repeating the above step until, in response to a confirmation operation input in a case where no deviation occurs for a shot fired under the guidance of the updated position of the ballistic calculation reticle, a ballistic offset value, corresponding to the selected calibration distance value, in the current ballistic table data is taken as a calibrated ballistic offset value.

In the ballistic data calibration mode, the user may perform multiple adjustments to calibrate the ballistic offset value corresponding to the distance value to be calibrated currently. During each adjustment, after the ballistic offset value, corresponding to the selected calibration distance value, in the ballistic table data is increased or decreased, change of the position of the ballistic calculation reticle is displayed in real time in the front imaging picture according to the ballistic offset value, so as to guide the user to perform a shooting test according to the change of the position of the ballistic calculation reticle. Whether the currently adjusted ballistic offset value is accurate is determined according to the deviation in the shot. In this way, the whole calibration process is highly visualized, which reduces the calibration difficulty for users. Allowing the user to calibrate the ballistic table data contributes to improved accuracy in the ballistic calculation.

In some embodiments, the ballistic calculation method based on a front scope further includes:
in response to a calibration adjustment operation for a movement of the front display area in a display range of a display screen, adjusting a position of the front display area in the display range of the display screen to calibrate an optical axis error between the front scope and the main scope.

The calibration of the position of the front display area of the front scope in the display range of the display screen, i.e. calibration of an optical position of the front scope, can typically be completed before delivery of the front scope. In the embodiments of the application, in the design of the front scope, a movement amount in pixels within a specified range is set for the front display area across the whole display screen. After the front scope is assembled to the main scope and the relative positional relationship between the front scope and the main scope is established, a horizontal or vertical movement of the front display area can be adjusted according to the position of the current display area on the display screen to calibrate the optical axis error between the front scope and the main scope.

In some embodiments, the front scope is an infrared front scope, and the main scope is a white-light scope, and the ballistic calculation method based on a front scope further includes:

determining a focal length of an infrared objective and a diagonal size of a target surface of an infrared detector according to a desired field of view (FOV); and

on the basis of a desired relationship between the ratio of the focal length of the infrared objective to a focal length of an infrared eyepiece and the ratio of the size of a display screen to the size of the target surface of the infrared detector for meeting a FOV matching requirement in the front mode, determining the focal length of the infrared eyepiece and the size of the display screen.

The size of the FOV of the front imaging picture may be set usually according to user requirements. In this embodiment, the focal length of the infrared objective, the diagonal size of the target surface of the infrared detector, the focal length of the infrared eyepiece and the size of the display screen are all key considerations in component selection strategy during the design process of the front scope. In an optional example, the focal length $f_{objective}$ of the infrared objective and the diagonal size $l_{detector}$ of the target surface of the infrared detector used may be determined according to the desired FOV; and the focal length $f_{eyepiece}$ of a collimating lens and the diagonal size $l_{OLED}$ of a display area of an OLED used are determined according to the FOV matching requirement and based on a visual amplification

$$\Gamma = \frac{f_{objective}}{f_{eyepiece}} \times \frac{l_{\text{OLED}}}{l_{detector}} = 1 \,.$$

In the above embodiment, the main scope may be an existing white-light scope, and the front scope may be an infrared front scope. The infrared front scope added to the white-light scope provides the white-light scope with infrared night vision capability, and a selection scheme for key components in the design of the infrared front scope is provided.

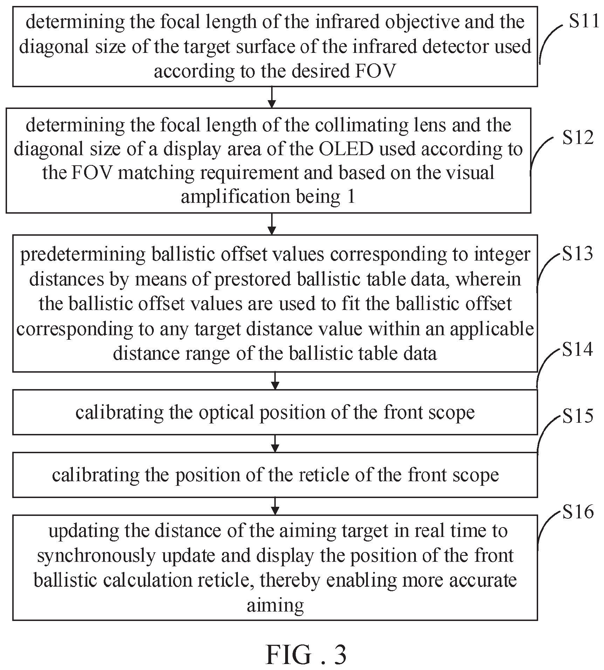

To provide a more comprehensive understanding of the ballistic calculation method based on a front scope according to the embodiments of the application, referring to FIG. 3, the ballistic calculation method based on a front scope includes:

S11, determining the focal length of the infrared objective and the diagonal size of the target surface of the infrared detector used according to the desired FOV;

S12, determining the focal length of the collimating lens and the diagonal size of a display area of the OLED used according to the FOV matching requirement and based on the visual amplification being 1;

S13, predetermining ballistic offset values corresponding to integer distances by means of prestored ballistic table data, wherein the ballistic offset values are used to fit the ballistic offset corresponding to any target distance value within an applicable distance range of the ballistic table data;

S14, calibrating the optical position of the front scope, which involves setting a specified range of movement amount in pixels for the front display area within the range of the whole screen to calibrate an optical axis error between the front scope and the white-light scope;

S15, calibrating the position of the reticle of the front scope, which involves, after the front mode is enabled, displaying an aiming reference point in the center of the front imaging picture, and setting a specified range of movement amount in pixels for the front imaging picture within the front display area to ensure that a front ballistic calculation reticle completely matches the reticle of the white-light scope;

S16, updating the distance of the aiming target in real time to synchronously update and display the position of the front ballistic calculation reticle, thereby enabling more accurate aiming.

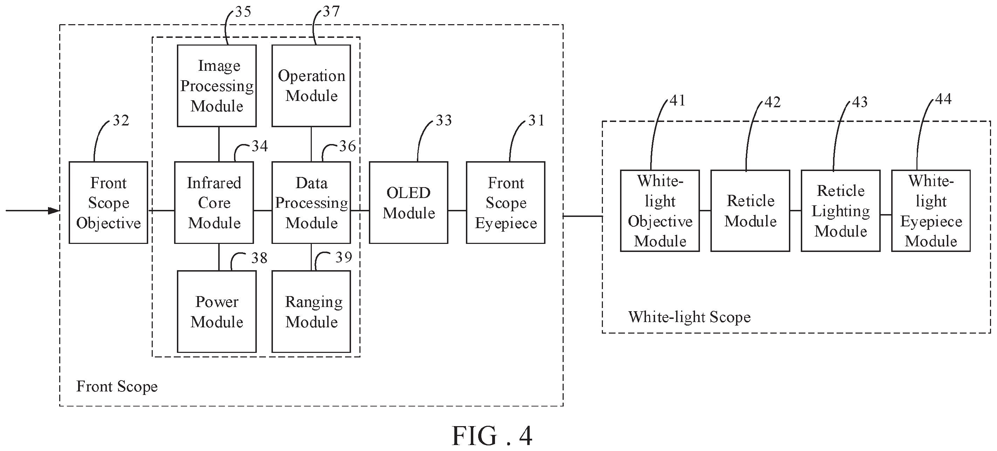

In one application example, referring to FIG. 4, a schematic structural diagram of a combined sighting system capable of implementing the ballistic calculation method based on a front scope according to the embodiments of the application to achieve a front ballistic calculation function is illustrated.

An infrared front scope includes: an infrared objective module, which mainly includes a front scope objective 32 configured to receive and converge infrared radiation in a scenario and transmit the infrared radiation to an infrared core module 34; the infrared core module 34, configured to receive the infrared radiation transmitted from the front scope objective 32 and convert the infrared radiation into an image signal; a main control module, mainly including an image processing module 35 and a data processing module 36; a display module, mainly including an OLED module 33 configured to display a corresponding infrared image according to an output of the main control module; and a front scope eyepiece 31, configured to amplify the infrared image displayed by the OLED module 33. The image processing module 35 is configured to generate a target infrared image according to the image signal of the infrared core module 34, perform enhancement processing with different effects on the target infrared image displayed by the OLED module 33, for example, performing thermal image pseudo-color processing and thermal image contour processing to highlight display details of the target so as to satisfy the requirements for revealing more detailed features of the aiming target in different scenarios. The image processing module 35 then sends the processed target infrared image to the OLED module 33 for display. The data processing module 36 is configured to perform calculation and simulation based on stored target distance values and display a calculation result and the position of a ballistic calculation reticle in the OLED module 33. An operation module 37 is formed by keys and a rotary encoder and configured for input of external operation data to the front scope, such as for enabling or disabling the front mode, for adjusting the position of the imaging display area, etc. A power module 38 supplies power by means of a storage battery and provides power to the front scope. A mounting module is configured to fixedly mount the front scope in front of the white-light scope. A ranging module 39 is configured to provide a target distance value between an observer and the aiming target to the data processing module 36. It should be noted that in the application example, the image processing module 35 and the data processing module 36 are two physically separated chips which form the main control module together. In actual application, the main control module may also be implemented by a single chip, which independently performs enhancement processing with different effects on the target infrared image, and calculation and simulation for the stored target distances.

The white-light scope sequentially includes: a white-light objective module 41, a reticle module 42, a reticle lighting module 43 and a white-light eyepiece module 44.

The operating principle of the combined sighting system is as follows. First, the ranging module 39 is mounted on the front scope, and the front scope is mounted at a suitable position in front of the white-light scope by means of the mounting module. Then, power is provided to the front scope by the power module 38, and the front mode is enabled by the operation module 37. At this moment, the infrared core module 4 starts to receive infrared radiation converged by the front scope objective 32 and converts the infrared radiation into a target infrared image signal. Next, the image processing module 35 performs enhancement processing on a target infrared image to highlight the display details of the target and sends the processed target infrared image to the OLED module 33 for display. At this moment, using the target distance value measured by the ranging module 39, the data processing module 36 obtains a ballistic offset value corresponding to the current target distance on the basis of prestored ballistic offset values . Next, a ballistic calculation reticle is displayed by the OLED module 33 to guide an aiming position, and the infrared image amplified by the front scope eyepiece 31 is transmitted into an optical system of the white-light scope. Finally, a front imaging picture is moved and adjusted by means of the operation module 37 to unify the ballistic calculation reticle of the front scope and the reticle of the white-light scope in the same coordinate system. At this moment, the front scope automatically calculates a ballistic calculation result according to the target distance value obtained by the ranging module 39, which can better guide the user to complete sighting according to the position of the ballistic calculation reticle in the ballistic calculation result.

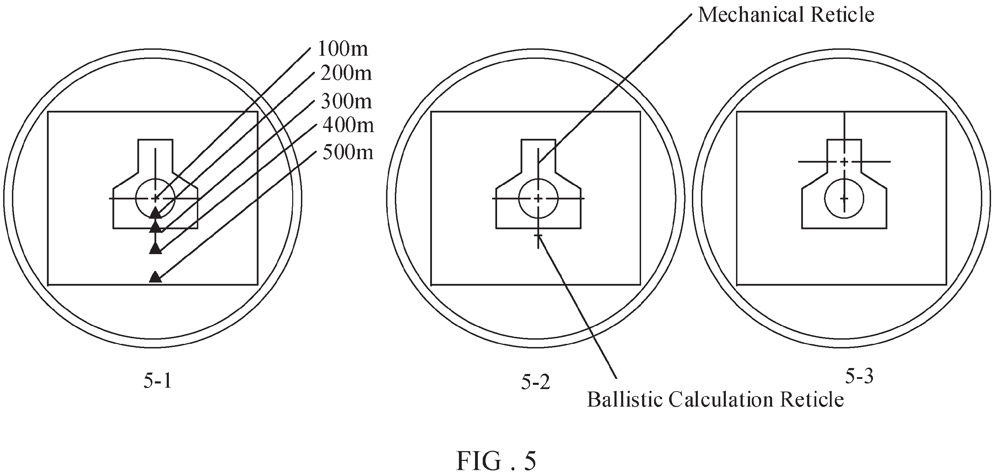

To more clearly expound the beneficial effects brought by the ballistic calculation function of the front scope in the combined sighting system, a comparative description is provided between a front scope without the ballistic calculation function and the front scope provided by this application. As shown in FIG. 5, the ballistic calculation principle of the front scope is as follows:

Because a bullet, after being fired, will descend vertically under the action of gravity, calibration is required to hit a target. A typical calibration distance is 100 meters, although users may select a distance less than 100 meters or greater than 100 meters for calibration. No matter which distance is used for calibration, absolute accuracy is available only in the vicinity of the calibration distance. Beyond the calibration distance, the point of impact will deviate from the reticle center with the increase in the rate of descent of the bullet, and the greater the distance, the greater the deviation. Without ballistic calculation, a shot aimed at a 100-meter target might hit a center of the target , but when shooting a target at 200 meters, 300 meters, 400 meters or 500 meters, the bullet can only hit a position below the center of the target, and the point of impact will be further away from the center of the target with the increase in the distance (as indicated by the small triangle in 5-1). When the front scope has the ballistic calculation function, the combined sighting system obtains a target distance value by means of the external ranging module, calculates a drop of the bullet under the current distance, then converts, by calculation, the drop of the bullet into a movement amount of the reticle from its 100-meter zero and, as a result of the ballistic calculation, displays a small reticle (ballistic calculation reticle as shown in 5-2) at the moved position. The user may accurately hit the target by elevating the scope and aiming using the new small reticle (as shown by 5-3). Within the effective shooting range, the target distance value may change quickly. However, no matter how the target distance value changes, the system can generate a new small reticle for aiming for the current target distance value. This eliminates the need for frequent manual adjustments of a mechanical knob, making the operation simple and convenient.

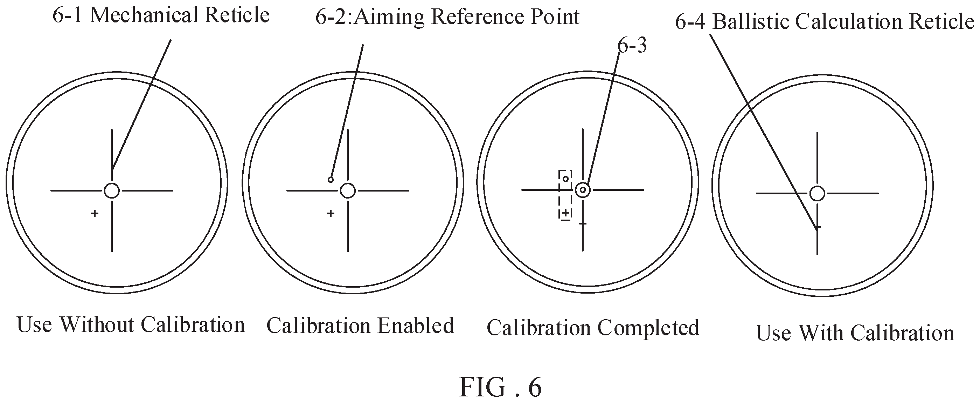

To more clearly expound the method for position calibration of the reticle of the front scope with the ballistic calculation function in the embodiment of the application, referring to FIG. 6, a comparative description is provided between the effects before position calibration of the reticle and the effects after calibration. The calibration principle is as follows:

In the standalone mode of the combined sighting system, that is, when the white-light scope is used, the optical axis of the scope is not coaxial with the axis along which a bullet is fired, so calibration is usually required at a distance of 100 meters or at another fixed distance. The specific method involves aiming a crosshair center at a target, firing a shot, observing a positional deviation between the point of impact and the center of the target, and then calculating an adjustment amount in the X direction and an adjustment amount in the Y direction by computation. Then, an adjusting knob on the white-light scope is rotated to adjust the position of the mechanical reticle (indicated by 6-1) to make the point of impact coincide with the center of the target at the calibration distance. For an existing white-light scope added with a front scope, the reticle of the front scope and the reticle of the white-light scope are generally used cooperatively. Neither an independent electronic reticle nor zero-calibration operation is available in the front mode. Therefore, when the ballistic calculation is directly implemented in the front scope without reticle position calibration, the result indicated by 6-1 in FIG. 6 occurs: the point obtained by each ballistic calculation does not coincide with the Y-axis of the mechanical reticle, and the calculation result deviates from the actual result both in the X-axis and the Y-axis and thus cannot be used. In the present embodiment, in the front mode, by presetting the aiming reference point (such as the thick black circle indicated by 6-2 in FIG. 6) for a target distance of 100 meters or a fixed position, the user is allowed to manually adjust the aiming reference point on a display screen toto coincide with the center of a mechanical reticle (as indicated by 6-3), that is, to calibrate the position of the reticle so as to correct a deviation between the ballistic calculation reticle and the mechanical reticle of the white-light scope. After this calibration, ballistic calculation is performed with the aiming reference point as the origin, such that the calibrated calculation reticle (as indicated by 6-4) is always displayed on the Y-axis of the mechanical reticle, enabling highly accurate aiming at targets of different distances.

As described above, according to the ballistic calculation method based on a front scope provided by the embodiments of the application, by providing the infrared front scope with the ballistic calculation function in front of the white-light scope, an infrared night vision function of the white-light scope is achieved, and the position of a new ballistic sighting reticle obtained by calculation may be provided for users to aim at and capture a target more quickly and accurately. In addition, by means of the aiming reference point, aligned with the center of the reticle of the main scope, in the front imaging picture, a deviation of the position of the new ballistic sighting reticle can be eliminated, such that the aiming accuracy can be enhanced by the ballistic calculation function of the front scope.

In another aspect, the application provides a combined sighting system, including a main scope and a front scope detachably mounted in front of the main scope. The front scope includes a main control module. The main control module is configured to perform the steps of the ballistic calculation method based on a front scope according to any of the embodiments of the application and fulfils the same technical effects as the embodiments of the ballistic calculation method based on a front scope, which will not be repeated here.

Optionally, referring to FIG. 4 again, the main scope may be a white-light scope, and the front scope may be an infrared front scope. The main control module may include an image processing module 35 and a data processing module 36. The image processing module 35 is configured to perform enhancement processing on an infrared image signal. The data processing module 36 is configured to implement the ballistic calculation method based on a front scope.

Optionally, a ranging module 39 is mounted on a housing of the front scope through detachable connection. The data processing module 36 is further configured to perform ranging calculation on the basis of a laser signal transmitted to an aiming target by the ranging module 39 and a return laser signal reflected back by the aiming target, to obtain a target distance value of the aiming target.

The embodiments of the application further provide a computer-readable storage medium with a computer program stored thereon. The computer program, when executed by a processor, implements the processes of the embodiments of the ballistic calculation method based on a front scope and fulfils the same technical effects, which will not be repeated here. The computer-readable storage medium may be, for example, a Read-Only Memory (ROM), a Random Access Memory (RAM), a diskette, a compact disc, or the like.

It should be noted that the term "include" or "comprise" or any other variants thereof are intended to indicate non-exclusive inclusion, such that a process, method, article or device comprising a series of elements not only includes elements that are listed, but also includes other elements that are not clearly listed or inherent elements of the process, method, article or device. Unless otherwise specifically stated, an element defined by "comprise a/an" does not exclude other identical elements in a process, method, article or device comprising said element.

With reference to the description of the above embodiments, those skilled in the art may clearly understand that the method in the above embodiments may be implemented by software and an essential hardware platform and may also be implemented by hardware, and the former is preferred in most cases. Based on such an understanding, the technical solutions of the invention or the part of the invention that makes a contribution to the prior art may be embodied in the form of a software product. The computer software product may be stored on a storage medium (such as an ROM/RAM, diskette, or a compact disc), including a plurality of instructions for causing a terminal (such as a mobile phone, a computer, a server, or a network device) to implement the method in the embodiments of the invention.

The above are merely specific embodiments of the invention, and the protection scope of the invention is not limited to the above embodiments. Any transformations or substitutions that can be readily obtained by any skilled in the art within the technical scope disclosed by the invention should fall within the protection scope of the invention. The protection scope of the invention should be defined by the claims.

**Claims**

1. A ballistic calculation method based on a front scope, comprising:

in a front mode in which a front scope is turned on, displaying an aiming reference point in a front imaging picture of a front display area; adjusting a movement amount of the front imaging picture in response to a movement adjustment operation for the front imaging picture to align the aiming reference point with a reticle center of a main scope, wherein an imaging light type of the front scope is different from an imaging light type of the main scope; acquiring a target distance value of an aiming target; and determining a current ballistic offset value for the aiming target on the basis of the target distance value and ballistic table data, and displaying a ballistic calculation reticle in the front imaging picture on the basis of the current ballistic offset value, so as to allow a sighting operation to be performed on the aiming target based on a position of the ballistic calculation reticle with respect to the reticle center, wherein the ballistic table data comprise a correspondence between multiple sets of distance values and ballistic offset values.

2. The ballistic calculation method based on a front scope according to claim 1, wherein acquiring a target distance value of an aiming target comprises:

acquiring the target distance value of the aiming target according to a data input operation, wherein the data input operation comprises an input operation performed by means of an operation module, and/or an input operation performed through an application interface; or, acquiring the target distance value of the aiming target that is obtained by calculation after a ranging module sends a laser signal to the aiming target.

3. The ballistic calculation method based on a front scope according to claim 1, wherein before determining a current ballistic offset value for the aiming target on the basis of the target distance value and ballistic table data, and displaying a ballistic calculation reticle in the front imaging picture on the basis of the current ballistic offset value, the ballistic calculation method comprises:

in a ballistic data calibration mode, determining, on the basis of a selected calibration distance value and currently stored initial ballistic table data, an initial ballistic offset value corresponding to the selected calibration distance value, and correspondingly displaying the ballistic calculation reticle in the front imaging picture on the basis of the initial ballistic offset value; and in response to an adjustment operation input in a case where a deviation occurs for a shot fired under the guidance of the position of the ballistic calculation reticle, updating the position of the ballistic calculation reticle in the front imaging picture, and synchronously updating the ballistic table data.

4. The ballistic calculation method based on a front scope according to claim 3, further comprising: in response to a confirmation operation input in a case where no deviation occurs for a shot fired under the guidance of the position of the ballistic calculation reticle, taking a ballistic offset value, corresponding to the selected calibration distance value, in the current ballistic table data as a calibrated ballistic offset value.

5. The ballistic calculation method based on a front scope according to claim 3, further comprising:

in response to an adjustment operation input in a case where a deviation occurs for a shot fired under the guidance of the updated position of the ballistic calculation reticle, updating the position of the ballistic calculation reticle in the front imaging picture, and synchronously updating the ballistic table data; and repeating the above step until, in response to a confirmation operation input in a case where no deviation occurs for a shot fired under the guidance of the updated position of the ballistic calculation reticle, a ballistic offset value, corresponding to the selected calibration distance value, in the current ballistic table data is taken as a calibrated ballistic offset value.

6. The ballistic calculation method based on a front scope according to claim 1, further comprising: in response to a calibration adjustment operation for a movement of the front display area in a display range of a display screen, adjusting a position of the front display area in the display range of the display screen to calibrate an optical axis error between the front scope and the main scope.

7. The ballistic calculation method based on a front scope according to claim 1, wherein the front scope is an infrared front scope, the main scope is a white-light scope, and the ballistic calculation method further comprises:

determining a focal length of an infrared objective and a diagonal size of a target surface of an infrared detector according to a desired field of view; and on the basis of a desired relationship between a ratio of the focal length of the infrared objective to a focal length of an infrared eyepiece and a ratio of a size of a display screen to the size of the target surface of the infrared detector for meeting a desired field of view matching requirement in the front mode, determining the focal length of the infrared eyepiece and the size of the display screen according to a field of view matching requirement in the front mode.

8. A combined sighting system, comprising a main scope and a front scope detachably mounted in front of the main scope, wherein the front scope comprises a main control module configured to implement the ballistic calculation method based on a front scope according to any one of claims 1 to 7.

9. The combined sighting system according to claim 8, wherein the main scope is a white-light scope; the front scope is an infrared front scope and comprises:

an infrared objective module, configured to receive an infrared light for infrared imaging;

an infrared core module, configured to convert the infrared light received by the infrared objective module into an infrared image signal;

the main control module, comprising a data processing module and an image processing module, wherein the image processing module is configured to perform enhancement processing on the infrared image signal, and the data processing module is configured to implement the ballistic calculation method based on the front scope;

a display module, configured to display an infrared image enhanced by the main control module; and

an infrared eyepiece module, configured to amplify and collimate the infrared image displayed by the display module and transmit the amplified and collimated infrared image into the white-light scope.

10. The combined sighting system according to claim 9, wherein the infrared front scope further comprises a ranging module detachably mounted on a housing of the infrared front scope;

the data processing module is further configured to perform ranging calculation on the basis of a laser signal transmitted to the aiming target by the ranging module and a return laser signal reflected back by the aiming target, to obtain the target distance value of the aiming target.

11. A computer-readable storage medium, storing a computer program, wherein the computer program, when executed by a processor, implements the ballistic calculation method based on a front scope according to any one of claims 1 to 7.

30

40

| Front Scope | | Main Scope |
|---|---|---|
| Main Control Module | → | |

FIG . 1

in a front mode in which a front scope is turned on, displaying an aiming reference point in a front imaging picture of a front display area
S101

adjusting a movement amount of the front imaging picture in response to a movement adjustment operation for the front imaging picture to align the aiming reference point with a reticle center of a main scope, wherein an imaging light type of the front scope is different from an imaging light type of the main scope
S103

acquiring a target distance value of an aiming target
S105

determining a current ballistic offset value for the aiming target on the basis of the target distance value and ballistic table data, and displaying a ballistic calculation reticle in the front imaging picture on the basis of the current ballistic offset value, so as to allow a sighting operation to be performed on the aiming target based on a position of the ballistic calculation reticle with respect to the reticle center, wherein the ballistic table data comprise a correspondence between multiple sets of distance values and ballistic offset values
S107

FIG . 2

determining the focal length of the infrared objective and the diagonal size of the target surface of the infrared detector used according to the desired FOV — S11

determining the focal length of the collimating lens and the diagonal size of a display area of the OLED used according to the FOV matching requirement and based on the visual amplification being 1 — S12

predetermining ballistic offset values corresponding to integer distances by means of prestored ballistic table data, wherein the ballistic offset values are used to fit the ballistic offset corresponding to any target distance value within an applicable distance range of the ballistic table data — S13

— S14

calibrating the optical position of the front scope — S15

calibrating the position of the reticle of the front scope

— S16

updating the distance of the aiming target in real time to synchronously update and display the position of the front ballistic calculation reticle, thereby enabling more accurate aiming

FIG . 3

FIG . 4

Mechanical Reticle

Ballistic Calculation Reticle

100m
200m
300m
400m
500m

5-1

5-2

5-3

FIG . 5

EP 4 764 388 A1

6-1 Mechanical Reticle    6-2:Aiming Reference Point    6-3    6-4 Ballistic Calculation Reticle

Use Without Calibration    Calibration Enabled    Calibration Completed    Use With Calibration

FIG . 6

## INTERNATIONAL SEARCH REPORT

| | International application No. |
| --- | --- |
| | **PCT/CN2023/141296** |

| A. | CLASSIFICATION OF SUBJECT MATTER |
| --- | --- |

F41G 1/14(2006.01)i

According to International Patent Classification (IPC) or to both national classification and IPC

| B. | FIELDS SEARCHED |
| --- | --- |

Minimum documentation searched (classification system followed by classification symbols)

Documentation searched other than minimum documentation to the extent that such documents are included in the fields searched

Electronic data base consulted during the international search (name of data base and, where practicable, search terms used)

CNTXT, ENTXT, CNKI: 瞄准镜, 前置, 红外, 白光, 弹道解算, 移动, 距离, 弹道射表, 测距, 更新, sighting, front, infrared, white light, ballistic solving, movement, distance, ballistic watch, ranging, update

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 107606994 A (JIANGSU NORTH HUGUANG OPTO-ELECTRONICS CO., LTD.) 19 January 2018 (2018-01-19) description, pages 1-6, and figures 1-3 | 1-11 |
| Y | CN 116242205 A (JIANGSU NORTH HUGUANG OPTO-ELECTRONICS CO., LTD.) 09 June 2023 (2023-06-09) description, pages 1-4, and figures 1-3 | 1-11 |
| Y | CN 219037767 U (HEFEI YINGRUI SYSTEM TECHNOLOGY CO., LTD.) 16 May 2023 (2023-05-16) description, pages 1-6, and figures 1-2 | 7 |
| A | CN 108955896 A (HEFEI YINGRUI SYSTEM TECHNOLOGY CO., LTD.) 07 December 2018 (2018-12-07) entire document | 1-11 |
| A | CN 112378291 A (JIANGSU NORTH HUGUANG OPTO-ELECTRONICS CO., LTD.) 19 February 2021 (2021-02-19) entire document | 1-11 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 June 2024** | **24 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/141296**

| C. | DOCUMENTS CONSIDERED TO BE RELEVANT | |
|---|---|---|
| Category* | Citation of document, with indication, where appropriate, of the relevant passages | Relevant to claim No. |
| A | CN 113203320 A (BEIJING BOP OPTO-ELECTRONICS TECHNOLOGY CO., LTD.) 03 August 2021 (2021-08-03)<br>entire document | 1-11 |
| A | US 10323904 B1 (GUNEYE LLC) 18 June 2019 (2019-06-18)<br>entire document | 1-11 |

Form PCT/ISA/210 (second sheet) (July 2022)

**INTERNATIONAL SEARCH REPORT**
Information on patent family members

International application No.

**PCT/CN2023/141296**

| Patent document cited in search report | | | Publication date (day/month/year) | Patent family member(s) | | | Publication date (day/month/year) |
|---|---|---|---|---|---|---|---|
| CN | 107606994 | A | 19 January 2018 | None | | | |
| CN | 116242205 | A | 09 June 2023 | None | | | |
| CN | 219037767 | U | 16 May 2023 | None | | | |
| CN | 108955896 | A | 07 December 2018 | None | | | |
| CN | 112378291 | A | 19 February 2021 | None | | | |
| CN | 113203320 | A | 03 August 2021 | None | | | |
| US | 10323904 | B1 | 18 June 2019 | US | 11408711 | B1 | 09 August 2022 |

Form PCT/ISA/210 (patent family annex) (July 2022)

**REFERENCES CITED IN THE DESCRIPTION**

**Patent documents cited in the description**

- CN 107229101 B
- US 9915503 B2